# EUROPEAN PATENT APPLICATION

(11) **EP 3 236 176 A1**
(43) Date of publication of application: **25.10.2017**
(21) Application number: 17166859.3
(22) Date of filing: 18.04.2017
(51) Int. Cl.: F24H 9/00, F24D 3/10, F16L 55/053, F24H 9/12, F28D 20/00

(54) **BUFFER TANK FOR WATER HEATER**

(30) Priority: 18.04.2016 KR 20160046995
(71) Applicant: Daesung Celtic Enersys Co., Ltd., Chungcheongbuk-do (KR)
(72) Inventor: CHO, Sung Tae, Cheongju-si, Chungcheongbuk-do (KR); CHO, Chul Hee, Cheongju-si, Chungcheongbuk-do (KR)
(74) Representative: Gulde & Partner

(57) **Abstract**

A buffer tank for a water heater is provided. The A buffer tank for a water heater may include a storage unit, a first connection pipe, and a second connection pipe. The storage unit has a space for storing water inside, an inlet, to which hot water is flowed from the outside, in the upper part thereof, and an outlet, from which the water stored inside is discharged, in the lower part thereof. The first connection pipe is formed in the inner space of the storage unit, has a tube form, is connected to the inlet, and is extended to a direction of the lower part of the storage unit. The second connection pipe is formed in the inner space of the storage unit, has a tube form, is connected to the outlet, and is extended to a direction of the upper part of the storage unit.

## Description

### CROSS-REFERENCE TO RELATED PATENT APPLICATION

This application claims the benefit of Korean Patent Application No. 10-2016-0046995, filed on April 18, 2016, in the Korean Intellectual Property Office, the disclosure of which is incorporated herein in its entirety by reference.

### BACKGROUND OF THE INVENTION

### 1. Field of the Invention

The present invention relates to a buffer tank for a water heater, and more particularly, to a buffer tank for a water heater which is installed to a water heater so as to prevent a temperature of hot water from rapidly increasing or decreasing.

### 2. Description of the Related Art

In general, in a hot water supply type water heater, running water at a low temperature flowed through a running water pipe is supplied to a heat exchanger and is heated by a burner. Then, the heated water is discharged through a connection pipe and is temporarily stored in a buffer tank. The hot water stored in the buffer tank is supplied to a user through a hot water pipe. A general buffer tank included in a conventional water heater is disclosed in Korean Patent Publication No. 2011-0130890, wherein the buffer tank includes an inlet and outlet in a lower part thereof. That is, hot water heated in a heat exchanger is flowed in a buffer tank through the inlet and water (hot water) stored in the buffer tank is discharged through the outlet so that the hot water is supplied to a user through a hot water pipe. However, when the inlet and the outlet are formed in the lower part of the buffer tank as described above, hot water is flowed from the lower part to an upper part and thus, a pump may be needed for an inflow of hot water.

### SUMMARY OF THE INVENTION

The present invention provides a buffer tank for a water heater which is installed to a water heater so as to prevent a temperature of hot water from rapidly increasing or decreasing.

According to an aspect of the present invention, there is provided a buffer tank for a water heater including a storage unit including a space for storing water inside, an inlet, to which hot water is flowed from the outside, in the upper part thereof, and an outlet, from which the water stored inside is discharged, in the lower part thereof, a first connection pipe formed in the inner space of the storage unit which has a tube form, is connected to the inlet, and is extended to a direction of the lower part of the storage unit, and a second connection pipe formed in the inner space of the storage unit which has a tube form, is connected to the outlet, and is extended to a direction of the upper part of the storage unit.

The first connection pipe may be extended to a position spaced apart from the bottom of the storage unit so that hot water flowed through the inlet is discharged to the bottom of the storage unit and the second connection pipe may be extended to a position spaced apart from the top surface of the storage unit so that the water stored in the upper part inside the storage unit is delivered to the outlet.

The first connection pipe and the second connection pipe may include a plurality of via holes to an upward and downward direction of the pipes, the via holes having each different size.
The diameters of the via holes formed in the first connection pipe may gradually increase toward the lower direction and the diameters of the via holes formed in the second connection pipe may gradually increase toward the upper direction.

### BRIEF DESCRIPTION OF THE DRAWINGS

The above and other features and advantages of the present invention will become more apparent by describing in detail exemplary embodiments thereof with reference to the attached drawings in which:
FIG. 1 is a cross-sectional view of a buffer tank according to an embodiment of the present invention;
FIG. 2 illustrates a path of hot water flowed in or discharged from the buffer tank of FIG. 1; and
FIG. 3 is a front view of a first connection pipe or a second connection pipe of the buffer tank of FIG. 1.

### DETAILED DESCRIPTION OF THE INVENTION

The attached drawings for illustrating exemplary embodiments of the present invention are referred to in order to gain a sufficient understanding of the present invention, the merits thereof, and the objectives accomplished by the implementation of the present invention.

Hereinafter, the present invention will be described in detail by explaining exemplary embodiments of the invention with reference to the attached drawings. Like reference numerals in the drawings denote like elements.

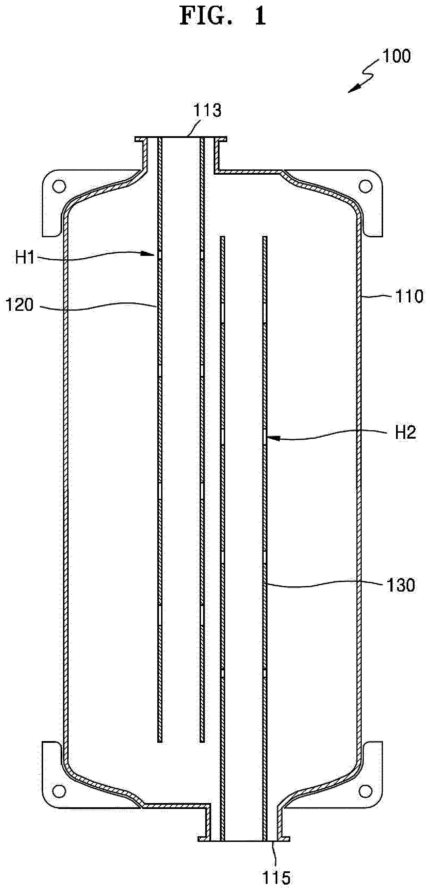

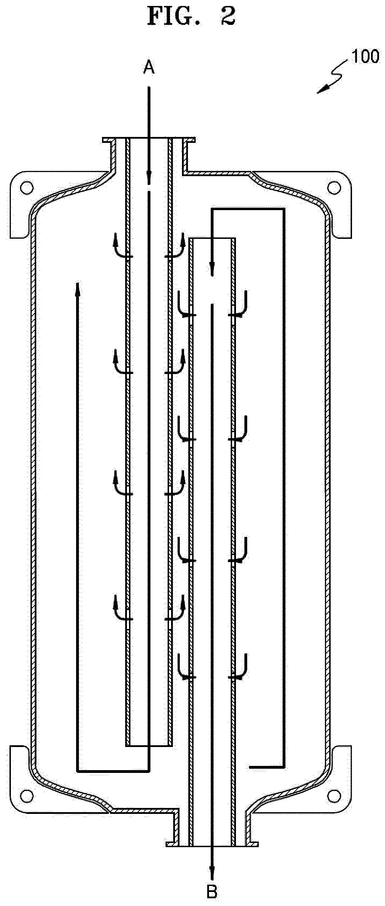

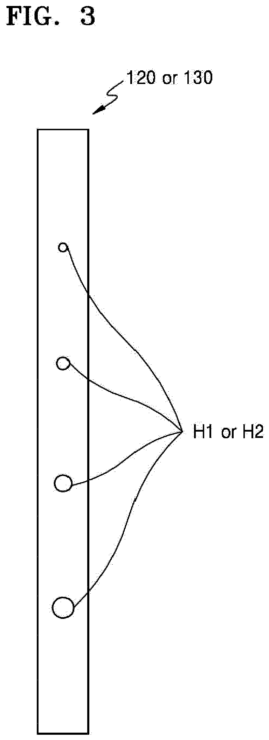

FIG. 1 is a cross-sectional view of a buffer tank 100 according to an embodiment of the present invention, FIG. 2 illustrates a path of hot water flowed in or discharged from the buffer tank 100 of FIG. 1, and FIG. 3 is a front view of a first connection pipe 120 or a second connection pipe 130 of the buffer tank 100 of FIG. 1.

Referring to FIGS. 1 through 3, the buffer tank 100 may include a storage unit 110, the first connection pipe 120, and the second connection pipe 130.

The storage unit 110 may include a space for storing water (hot water) inside, an inlet 113, to which hot water is flowed, in the upper part thereof, and an outlet 115, from which the water stored inside is discharged, in the lower part thereof. In order to prevent confusion between the water inside the storage unit 110, which is hot water, and hot water flowed from the outside, hereinafter, the hot water flowed from the outside is called 'hot water' and the hot water inside the buffer tank 100 is called 'water'. The hot water flowed from the outside may be hot water at a high temperature which is heated while passing through a heat exchanger in the water heater. The storage unit 110 may be a container type including an empty space for storing water inside, and the first connection pipe 120 and the second connection pipe 130 may be formed in the space.

The first connection pipe 120 may be formed in the inner space of the storage unit 110, may have a tube form, may be connected to the inlet 113, and may be extended to a direction of the lower part of the storage unit 110. The first connection pipe 120 may include a one end connected to the inlet 113 and the other end disposed in the inner space of the storage unit 110 so that the hot water may be delivered to the inner space of the storage unit 110. The first connection pipe 120 may be extended to a position spaced apart from the bottom of the storage unit 110 so that the hot water flowed through the inlet 113 is discharged to the bottom of the storage unit 110. That is, as illustrated in FIGS. 1 and 2, the first connection pipe 120 is formed and extended to a position which is spaced apart from the bottom of the inner space of the storage unit 110 by a regular interval so that the hot water flowed through the inlet 113 may be discharged to the bottom of the storage unit 110 through the first connection pipe 120.

The second connection pipe 130 may be formed in the inner space of the storage unit 110, may have a tube form, may be connected to the outlet 115, and may be extended to a direction of the upper part of the storage unit 110. The second connection pipe 130 may include a one end connected to the outlet 115 and the other end disposed in the inner space of the storage unit 110 so that the water inside the storage unit 110 may be delivered to the outlet 115. The second connection pipe 130 may be extended to a position spaced apart from the top surface of the storage unit 110 so that the water stored in the upper part inside the storage unit 110 is delivered to the outlet 115. That is, as illustrated in FIGS. 1 and 2, the second connection pipe 130 is formed and extended to a position which is spaced apart from the top surface of the inner space of the storage unit 110 by a regular interval so that the water inside the storage unit 110 is delivered to the outlet 115 through the second connection pipe 130. The delivered water may be discharged to outside the buffer tank 100 through the outlet 115.

As described above, since the first connection pipe 120 is extended from the inlet 113 formed in the upper part of the storage unit 110 to a lower direction and the flowed hot water moves along the first connection pipe 120 to a lower direction, the flowed hot water may easily move to the bottom of the storage unit 110 without using a separate device such as a pump. Also, since the second connection pipe 130 is extended from the outlet 115 formed in the lower part of the storage unit 110 to an upper direction and the water inside the storage unit 110 moves along the second connection pipe 130 to a lower direction, the water in the upper part of the storage unit 110 may be easily discharged through the outlet 115.

As illustrated in FIGS. 1 through 3, a plurality of via holes H1, each of which has different sizes, may be formed in the first connection pipe 120 to an upward and downward direction. Since the hot water delivered through the first connection pipe 120 is delivered to the storage unit 110 through the via holes H1, the hot water may be easily mixed with the water. Also, the via holes H1 formed in the first connection pipe 120 may have each different size and for example, the diameters thereof may gradually increase toward the lower direction. As the diameters of the via holes H1 are different from each other, the hot water delivered through the first connection pipe 120 may be easily mixed with the water inside the storage unit 110.

As illustrated in FIGS. 1 through 3, a plurality of via holes H2, each of which has different sizes, may be also formed in the second connection pipe 130 to an upward and downward direction. The water inside the storage unit 110 may be delivered to the second connection pipe 130 through the via holes H2 and then, may be delivered to the outlet 115. Also, the via holes H2 formed in the second connection pipe 130 may have each different size and for example, the diameters thereof may gradually increase toward the upper direction. As the diameters of the via holes H2 are different from each other, more water in the upper part than that in the lower part stored in the storage unit 110 may be flowed to the second connection pipe 130.

Referring to FIG. 2, a path of flowed hot water A discharged through the buffer tank 100 is illustrated. As illustrated in FIG. 2, when the hot water A is flowed to the buffer tank 100 from the outside through the inlet 113, the hot water A is delivered to the inner space of the storage unit 110 through the first connection pipe 120. Here, the hot water A may be mixed with the water in the storage unit 110 through the via holes H1 formed in the first connection pipe 120 or the hot water A may be discharged to the bottom of the storage unit 110 through the other end of the first connection pipe 120. As a temperature of the hot water flowed from the outside is higher than the water in the storage unit 110, the hot water flowed through the first connection pipe 120 moves to the upper direction of the storage unit 110 and is mixed with the water in the storage unit 110. In this case, a temperature of the water in the upper part of the storage unit 110 is higher than the water in the lower part and such water at a high temperature is delivered to the second connection pipe 130 through the other end of the second connection pipe 130 and the via holes H2 formed in the second connection pipe 130. Then, the water delivered to the second connection pipe 130 is delivered to the outlet 115 so as to be discharged to the outside the buffer tank 100 through the outlet 115.

The buffer tank for a water heater according to an embodiment of the present invention includes an inlet in the upper part thereof and an outlet in the lower part thereof so that hot water may be easily flowed in the buffer tank without using a separate device such as a pump. Also, the buffer tank for a water heater according to an embodiment of the present invention includes a storage unit, wherein the storage unit includes long pipes, each of which is connected to the inlet and the outlet, so that water may be easily mixed in the buffer tank. Since water rises upwardly as a temperature of water increases, hot water at a high temperature flowed through the inlet rises to an upper space from a lower space in the buffer tank and thereby, is easily mixed with water existing in the buffer tank. In addition, sizes of via holes formed in a first connection pipe or a second connection pipe are different from each other in the buffer tank for a water heater according to an embodiment of the present invention and thus a temperature deviation in the entire buffer tank may be minimized.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A buffer tank for a water heater comprising:
a storage unit comprising a space for storing water inside, an inlet, to which hot water is flowed from the outside, in the upper part thereof, and an outlet, from which the water stored inside is discharged, in the lower part thereof;
a first connection pipe formed in the inner space of the storage unit which has a tube form, is connected to the inlet, and is extended to a direction of the lower part of the storage unit; and
a second connection pipe formed in the inner space of the storage unit which has a tube form, is connected to the outlet, and is extended to a direction of the upper part of the storage unit.

2. The buffer tank for a water heater of claim 1, wherein the first connection pipe is extended to a position spaced apart from the bottom of the storage unit so that hot water flowed through the inlet is discharged to the bottom of the storage unit and the second connection pipe is extended to a position spaced apart from the top surface of the storage unit so that the water stored in the upper part inside the storage unit is delivered to the outlet.

3. The buffer tank for a water heater of claim 1, wherein the first connection pipe and the second connection pipe comprise a plurality of via holes to an upward and downward direction of the pipes, the via holes having each different size.

4. The buffer tank for a water heater of claim 3, wherein the diameters of the via holes formed in the first connection pipe gradually increase toward the lower direction and the diameters of the via holes formed in the second connection pipe gradually increase toward the upper direction.
